# EUROPEAN PATENT SPECIFICATION

(11) **EP 1 638 408 B1**
(45) Date of publication and mention of the grant of the patent: **29.04.2009**
(21) Application number: 04749028.9
(22) Date of filing: 18.06.2004
(51) Int. Cl.: A23J 1/14, A23J 3/16

(54) **HIGH PROTEIN CURD, PROCESS FOR PRODUCING AND USE OF A HIGH PROTEIN CURD**
(BOHNEN)GALLERTE MIT HOHEM PROTEINGEHALT, VERFAHREN ZUR HERSTELLUNG SOWIE VERWENDUNG EINER (BOHNEN)GALLERTE MIT HOHEM PROTEINGEHALT
CAILLE RICHE EN PROTEINES, PROCEDE DE PRODUCTION ET UTILISATION DUDIT CAILLE RICHE EN PROTEINES

(30) Priority: 18.06.2003 US 320282 P; 19.06.2003 SE 0301774
(43) Date of publication of application: 29.03.2006
(73) Proprietor: Raisio plc, 21201 Raisio (FI)
(72) Inventor: FUNETEG, Bo, S-290 60 Kyrkhult (SE); SVÄRD, Rigmor, S-295 91 Bromölla (SE); LINGERUD, Cecilia, S-374 30 Karlshamn (SE)
(74) Representative: Svensson, Johan Henrik
(86) International application number: PCT/SE2004/000989
(87) International publication number: WO 2004/110162

(56) References cited:
- EP-A2- 0 385 266
- CH-A5- 632 905
- US-A- 4 060 203

## Description

### FIELD OF INVENTION

The invention relates to a high protein curd based on seeds from leguminous plants comprising a protein content of at least 15 % (DS), a fibre content of at least 20 % (DS), a particle size of 800 µm or less, and a dry substance (DS) of from about 15 % to about 60 % (w/w), such as a high protein soybean curd. The invention also relates to a process for the production of a high protein curd based on seeds from leguminous plants, such as soybeans. Such an improved curd has a high nutritional value for mammals, such as human beings. The invention further relates to a preserved base based on said high protein curd for use as an ingredient in protein and/or fibre enriched or replaced food applications, such as meat alternatives, confectionery products, and to a process for the production of said preserved base.

### BACKGROUND OF THE INVENTION

US-A-4 060 203 discloses a process for extracting protein to produce protein isolate usable for improving functional properties in a food system, e.g. meat product, bread etc.. According to this document low-fat seeds are soaked before wet milling, the protein is made soluble and a floating layer mainly composed of fibre is removed and the insoluble part (residue including starch) is removed. The protein in the soluble part is precipitated by rapid heating to 60° to 100° C. This heat treatment results in 1) a floating layer comprising oil and low molecular protein, 2) protein curd, and 3) whey. Finally, the protein curd is purified to form the protein isolate.

EP-A2-0 385 266 discloses a method for processing whole soybeans to produce pieces of textured soy protein material having a meat-like texture and appearance without grassy or beany flavor and odor. The beans are hydrated and acidified, wet milled and the slurry is heat-treated by injecting pressurized steam in a treatment zone to rapidly denaturate the soy protein. The texturized soy protein produced has a composition reflecting the composition of whole soybeans.

High protein curd has a widespread utility within the food industry and may possibly prove to be one of the products most consumed by human beings in the future. Several reasons may apply; for example, an increase in the population of human beings and a subsequent decrease in land available for farming, limiting the diversity of crops. Crops for human beings and not for animals may then be prioritised. Another possible scenario might be an increasingly limited supply of water, again leading to a prioritised use of the water for human and not animal consumption. The outcome could eventually be a decrease in the supply of meat, even though the consumption of meat might still be desired. If, however, the growing population of human beings could be supplied with a meat alternative or replacement having the taste and the texture of meat, there might be a reduced squander of the limited resources remaining for all.

Additionally, there is an increasing demand for vegetarian meals. There is also a demand, especially in developed countries, for food preparation in a controlled way, resulting in well-characterised food products having a clearly-defined nutritional value.

To solve the above mentioned problems, an increased focus on developing new processes and new products having high nutritional value, optimised for human consumption, has to be made.

### SUMMARY OF THE INVENTION

The invention relates to a high protein curd based on seeds from leguminous plants having an increased nutritional value which may be used for the production of balanced food products for mammals, such as humans. The invention also relates to a new improved process, which uses mechanical treatment of the seeds, for example, soybeans, without the use of toxic or environmentally unfriendly chemicals often included in conventional processing of seeds, including that of soybeans. The curd has an amino acid profile nutritionally comparable to meat protein with respect to amino acids, the profile reflecting the needs of children up to the age of 15, as well as of adults desiring to replace meat protein with protein from vegetable sources. The curd is thus an excellent choice for inclusion in food products.

According to a first embodiment the invention relates to a high protein curd based on seeds from leguminous plants comprising a protein content of at least 15 % (DS), a fibre content of at least 20 % (DS) and a particle size of 800 µm or less. The high protein curd has a high nutritional value and can be used within the food industry for the production of food products, such as meat alternatives and/or confectionery products.

According to a second embodiment the invention relates to a process for the production of a high protein curd based on seeds from leguminous plants comprising the steps of providing the seeds, washing the seeds in water at a temperature between 80-95 °C, milling the seeds and producing a slurry, heating the slurry in one or more steps to reach a temperature of at least 100 °C, separating the liquid phase and the high protein curd (or solid phase) in one or more steps, obtaining the high protein curd having a particle size of 800 µm or less.

According to a third embodiment, the invention relates to a preserved base based on said high protein curd for use as an ingredient in protein and/or fibre enriched or replaced food applications, such as meat alternatives or replacements and/or confectionery products. The base may be preserved with salt, sugar, acids, other agents normally used in food preservation, or a mixture of these. The base preserved predominantly with salt or "salt base" is preferably used as an ingredient in salty products such as meat alternatives. The base preserved predominantly with sugar or "sweet base" is preferably used as an ingredient in sweet products, such as confectionery products. Acids, such as citric acid, are also commonly used in food preservation, and may be employed as a supplementary preservative in the production of both salt and sweet bases.

According to a fourth embodiment, the invention relates to a process for the production of the preserved base comprising the steps of obtaining the high protein curd according to the first and second embodiments, and further optional drying, mixing with preservatives, and optionally milling the curd to give the preserved salt or sweet base. The process, being a mild process with respect to heat and mechanical treatments, results in a high nutritional curd possessing a texture which makes the curd very suitable for use in the food industry. The process in itself is economical and cost-effective, and does not generally involve the use of chemicals, i.e., is environmentally friendly.

### DETAILED DESCRIPTION OF THE INVENTION

### Definitions

In the context of the present application and invention the following definitions apply:

The term "high protein curd based on the seeds from leguminous plants" refers to the solid phase obtained after processing of seeds in which the processed seeds after the process are separated into a solid phase and a liquid phase, using, for example, decantation.

The "high protein curd based on the seeds from leguminous plants" is also referred to as "the solid phase".

The term "preserved base" refers to a food concentrate based on said high protein curd for use as an ingredient in protein and/or fibre enriched or replaced food applications, such as meat alternatives and/or confectionery products. The base may be preserved with salt, sugar, acids, and other agents normally used in food preservation, or a mixture of these.

The term "salt" as used herein refers to sodium chloride, which may or may not be iodized, as used as in the food industry. The term also refers to potassium chloride, calcium chloride and/or magnesium chloride used as alternatives to sodium chloride.

The term "preserving salts" or "preserving agents" refers to preservatives other than sodium chloride, such as sodium benzoate, monosodium glutamate, antioxidants.

The term "salt base" refers to the base preserved predominantly with salt (as opposed to sugar) preferably intended for use as an ingredient in salty products such as meat alternatives.

The term "sweet base" refers to the base preserved predominantly with sugar (as opposed to salt) preferably intended for use as an ingredient in sweet products, such as confectionery products.

The term "sugar" may include a variety of typical sweeteners used in the food industry, for example, glucose, dextrose, sucrose (or saccharose) and even artificial sweeteners, such as saccharin.

The term "meat alternative" is used interchangeably with "meat replacement".

The term "hulls" refers to the outer covering of the any seed or fruit, and in the present context to the outer covering of seeds from leguminous plants. The term "hulls" may be used interchangeably with the terms "shells", "husks", or "pods".

The term "dehusked" refers to seeds which have had their husks/shells/hulls/pods removed.

The term "comprising" as used herein should be understood to include, but not be limited to, the stated items.

### HIGH PROTEIN CURD BASED ON SEEDS FROM LEGUMINOUS PLANTS

The invention relates to a new high protein curd based on seeds from leguminous plants having a nutritional value suitable for mammals, such as human beings. The high protein curd may be obtained by the new improved method or process disclosed herein. The process is optimised for the production of high protein curd based on the seeds from leguminous plants, such as a soybean curd, having a high nutritional value. The produced curd comprises components which normally are reduced or eliminated during conventional processes, such as when soybeans are processed for the production of, for example, soybean milk, where focus is on producing a high nutritional soybean milk and not on use of the curd "waste".

More specifically, the invention relates to a high protein curd based on seeds from leguminous plants, such as soybeans, and other beans including kidney beans, white beans and black beans such as baby lima, large lima, blackeye, dark red kidney, garbanzo, great northern, light red kidney, navy, pink, pinto, small red, and peas including yellow peas and chick pea. The curd comprises a protein content of at least 15 % (dry substance (DS), such as at least 20 % (DS), such as at least 30 % (DS); a fibre content of at least 20 % (DS), such as at least 25 % (DS), such as at least 35 % (DS); and a particle size of 800 µm or less, such as from about 100 µm to about 800 µm, or from about 200 µm to about 800 µm, or from about 400 µm to about 600 µm; and a dry substance (DS) of from about 15 % to about 60 % (w/w), such as a DS of from about 20 % to about 30 % (w/w) .

Examples of the particle size distribution can be found in EXAMPLE 4. The particle size is an important parameter, since it determines the structure and composition, with influence on factors such as the dry substance content and texture, of the high protein curd based on seeds from leguminous plants. There exists therefore a different requirement of particle size and/or size distribution for different products.

There is thus a possibility to use the curd within the food industry as an excellent vegetable source in a food product made for mammals such as animals and/or human beings. Examples of food products are vegetable-based meat alternatives and confectionery products. If the seeds are soybeans, the protein content may be from about 35 to about 45% such as 35, 40 or 45 % (DS).

The high protein curd has an amino acid content and amino acid profile which corresponds to the values which children up to 15 years are in the need of (Protein Quality Evaluation, Report of the Joint FAO/WHO Expert Consultation. Rome: FAO Food and Nutrition Paper No 51, 1991), in particular with respect to the essential amino acids. Examples showing the content of the amino acids which are found in the high protein curd, can be found in EXAMPLES 3 (soybean) and 8 (brown bean).

In the case of the curd being based on soybean, small amounts of the trypsin inhibitor may be found in the high protein soybean curd as shown in EXAMPLE 5. The high protein soybean curd may inhibit less than 10.0 mg, such as less than 5.0 mg, such as less than 3.0 mg, of trypsin/gram high protein soybean curd. A typical value is 2.5 mg of trypsin/gram high protein soybean curd based on dry substance (DS) content.

The high protein curd based on the seeds from leguminous plants may be optionally dried to a DS content of 70 % or less (w/w) in order to enable the possibility to store the high protein curd for later use, or to enable transport of the high protein curd from one place to another.

### PROCESS FOR THE PRODUCTION OF HIGH PROTEIN CURD

Further, the invention relates to a process for the production of a high protein curd based on seeds from leguminous plants. The process avoids the use of toxic or environmentally unfavourable chemicals, is economical and uses low amounts of water, and results in a high protein curd suitable as a vegetable protein source and meat alternative in the food industry. The process involves steps which allow the possibility to obtain a solid phase (or high protein curd) having a high nutritional value with an excellent amino acid profile, and a liquid phase waste. The solid phase may further be used within the food industry, for example, in the production of a preserved base for use as an ingredient in protein and/or fibre enriched or replaced food applications, such as meat alternatives and/or confectionery products.

The process comprises, firstly, the step of providing the seeds from the leguminous plants. The seeds may be conventionally, GMO (genetic modified organism) or ecologically grown, as well as a mixture thereof.

The seeds are then washed in water at a temperature between 80-95 °C, such as between 85-92 °C. Typically the seeds are washed at 85 °C or 92 °C for a short period of time, from about 1 to 5 minutes, for example about 90 seconds. Such a washing treatment allows less than 30 % water to be absorbed into the seeds. The washing step used is a conventional washing step to remove undesirable particles and microorganisms, which may have remained on the seeds after harvest.

The seeds, which may or may not be dehusked, are then milled to produce a slurry. The critical parameter to be achieved by the milling step is a particle size of 800 µm or less, such as from about 100 µm to about 800 µm, or from about 200 µm to about 800 µm, or from about 400 µm to about 600 µm. Such milling processes as fractionating by dry or wet grinding, are well known to a person skilled in the art. Other examples of milling apparatus which may be used include pin, hammer, roller, perforated disk and colloidal mills. The milling may be performed either in one step or in several steps using the same type of mill with different sizes, or, two or more different types of mills, such as a combination of a perforated disc mill and a colloidal mill. One example is a combination of a first step using a perforated disk mill having a diameter of from about 1 to about 5 mm, such as from about 2 to about 4 mm, for example, 3 mm, and a second step using a colloid mill having one or more slits which achieve a particle size of below 800 µm such as from about 100 µm to about 800 µm, or from about 200 µm to about 800 µm, from about 400 µm to about 600 µm. Examples of slit sizes are 0.1, 0.2, 0.3, 0.4, 0.5, 0.6, 0.7, 0.8, 0.9, 1.0, 1.1, 1.2, 1.3 and 1.4 mm.

After the milling or grinding step, the slurry shall be heated using one or more steps to reach a temperature of at least 100 °C to reduce or eliminate the enzymatic levels of enzymes such as the trypsin inhibitor, to insignificant or markedly lower levels (based on dry substance content) of about 50 %, such as 80 %, such as 90 %, lower than the trypsin inhibitor levels found for intact soybean. The extent to which trypsin inhibitor is destroyed by heating is a function of factors such as temperature, duration of heating and particle size. At 100 °C nearly all of the trypsin inhibitor is destroyed after 10 minutes.

The heating may be performed using any of the heating methods chosen from those typically used in food processing, such as dielectric heating, microwave irradiation, infrared irradiation or direct steam injection. The heating may be performed in one or more steps, such as by a first step of steam injection at 120 °C for less than 30 seconds, followed by a second step of flashing the slurry at a temperature of below 85 °C. However, the heating should not be carried on for too long or at too elevated temperatures to maintain most of the nutritional value of the high protein curd. The liquid phase and the high protein curd are separated, for example, using decantation. The process may contain additional steps such as further decantation or other separation steps. If the seeds contain high levels of starch, an additional step of enzymatic treatment may be involved. If such a step is necessary a person skilled in the art would know how to degrade the starch to enable further processing of the seeds.

Further, the invented process results in a high protein curd based on seeds from leguminous plants being substantially free from bacteria, yeast and mould.

The processed high protein curd may be used directly or stored until further use. Storage may be implemented in any suitable form such as by refrigeration or freezing. Drying to a DS content of about 70% or less (w/w) may be optionally performed in a number of ways, such as by roller drying, freeze-drying, fluid bed drying, spray drying, drum drying or a combination of methods thereof.

Additionally, the invented process is suitable for use in the processing of seeds from leguminous plants such as soybean, red beans, kidney beans, white beans and black beans such as baby lima, large lima, blackeye, dark red kidney, garbanzo, great northern, light red kidney, navy, pink, pinto, small red, peas such as yellow peas and chick pea.

However, the invented process should not be limited thereto and may be used for any kind of seeds where the goal is to obtain a curd having a particle size of 800 µm or less, and having a nutritionally well balanced amino acid profile. Such a profile should reflect the needs of persons not consuming animal proteins such as vegetarians, or the needs of persons not consuming sufficient total protein, animal or vegetable, such as children/adults suffering from malnutrition who require protein additions/supplements.

### PRESERVED BASE BASED ON THE HIGH PROTEIN CURD AND A PROCESS FOR THE PRODUCTION OF THE PRESERVED BASE

The invention relates to a preserved base based on the high protein curd. The curd is processed and preserved with salt, sugar, acids, other agents normally used in food preservation, or a mixture of these. The base preserved predominantly with salt (sodium chloride) or "salt base" is then preferably used as an ingredient in salty products such as meat alternatives. The base preserved predominantly with sugar or "sweet base" is preferably used as an ingredient in sweet products, such as confectionery products. Acids, such as citric acid, are also commonly used in food preservation, and may be employed as a supplementary preservative in the production of both salt and sweet bases. The preservation process preferably makes use of a combination of preserving agents to influence the pH, water activity and the undesired microbiological activity, thereby conferring a longer shelf-life to the preserved base. The production of the salt base involves the use of salt, acids such as citric acid, and other preserving agents such as sodium benzoate. The salt base may then be used as an ingredient in salty food products such as meat alternatives in the form of burgers, sausages and patties. The production of the sweet base involves the use of acids such as citric acid, and sugars such as saccharose, as well as other preserving agents such as sodium benzoate. The sweet base may then be used as an ingredient in sweet products such as confectionery products, for example, cakes and sweet pastries.

The process for the production of the preserved base comprise the steps of obtaining the high protein curd as described earlier, and optionally drying, mixing with preservatives and optionally milling the curd to give the salt or sweet base. The production of the salt base involves the use of salt, acid(s) such as citric acid, and other preserving agents such as sodium benzoate. The production of the sweet base involves the use of sugars such as saccharose, acid(s) such as citric acid, as well as other preserving agents such as sodium benzoate.

The curd is dried to a dry substance (DS) of from about 15% to about 70%, such as from about 20% to about 60%, such as about 30% to about 40%, such as 35% (w/w). The particle size of the high protein curd affects its most suitable dry substance content. The preserved base has a diy substance (DS) of from about 15 % to about 70 % (w/w).

The drying may be performed using, for example, a drum dryer, fluid bed dryer, spray dryer, roller dryer, or a combination of these apparatus. The drying temperature and time varies according to the drying method used. The curd is then mixed with salt, sugar, such as saccharose and glucose, acids such as citric acid and lactic acid, and other agents normally used in food preservation. The preserved base is then optionally milled to a particle size of 800 µm or less, such as from about 100 to about 800 µm, such as from about 250 to about 400 µm, such as from about 250 to about 300 µm. The milling may be performed in one or more steps using one or more different mills. Examples of these include colloidal mills, and perforated disc mills. The milling performance is selected to obtain a particle size suitable for further use of the base. The obtained salt base is then preferably used as an ingredient in salty products such as meat alternatives, while the obtained sweet base is preferably used as an ingredient in sweet products such as confectionery products and other sweet applications.

### EXAMPLES

The invention is illustrated below by a number of non-limiting examples. While the invention has been described in relation to certain disclosed embodiments, the skilled person may foresee other embodiments, variations or combinations which are not specifically mentioned but are nonetheless within the scope of the appended claims.

### EXAMPLE 1

### Production of soybean curd

27-30 kg of soybeans was fed by a screw into a bean washer having a temperature of 92 °C for 90 seconds. The soybeans were then milled together with the process water in a perforated disk mill with a hole diameter of 3 mm, after which the produced slurry was pumped into a second milling step, a colloid mill. The slurry was then pumped into a deaeration vessel and the temperature was decreased to 78 °C. The slurry was pumped into a steam injector and heated with steam at a temperature of 120 °C for 5 seconds. After this, the slurry was transferred into a flashing vessel and the temperature was decreased to 83 °C. The slurry was then pumped into a decanter where the liquid and the solid phases were separated. The solid phase was then mixed with water and transferred to an additional decanter where an additional separation occurred and the final high protein soybean curd (solid phase) was obtained.
The soybeans and the soybean curd were analysed to determine the content of protein, fat, fibre and amino acids. The particle size and the trypsin inhibition were also determined. The methods used for the measurement of these parameters and their results are shown in the following examples.

### EXAMPLE 2

### Determination of the protein, fat and fibre content

The soybeans used to produce the high protein soybean curd (solid phase) were analysed together with the solid phase produced in EXAMPLE 1. The analysis was done by AnalyCen, Box 905, S- 531 19 Lidköping, Sweden, and was used to determine the content of the fibre, fat and proteins using standard methods.

The fibre content was analysed by the method/ref AOAC 45.4.07/NMKL 129.

The protein content was analysed by the method/ref A 207:51.

The fat content was analysed by the method/ref NMKL 131.

The results are shown in table 1 below.

**TABLE 1**

| % DS (w/w) | Beans (with hulls) | Curd |
|---|---|---|
| Fibre | 19 | 50 |
| Protein | 45 | 36 |
| Fat | 15 | 14 |

### EXAMPLE 3

### Determination of the amino acid content

The soybeans used to produce the high protein soybean curd (solid phase) were analysed together with the solid phase produced in EXAMPLE 1 to determine the amino acid content. The analyses were done by AnalyCen, Box 905, S- 531 19 Lidköping, Sweden, using the well-known method published in E.C Dir 98/64/EG enclosure 1.

In the present application, amino acid names and atom names (e.g. CA, CB, NZ, N, O, C, etc) are used as defined by the Protein DataBank (PDB) which are based on the IUPAC nomenclature (IUPAC Nomenclature and Symbolism for Amino Acids and Peptides (residue names, atom names, etc.), Eur. J. Biochem. 138, 9-37 (1984) together with their corrections in Eur. J. Biochem., 152, 1 (1985). (All references cited herein are hereby incorporated by reference in their entirety). The amino acids are as follows: Alanine (Ala), cysteine (Cys), aspartic acid (Asp), glutamic acid (Glu), phenylalanine (Phe), glycine (Gly), histidine (His), isoleucine (Ile), lysine (Lys), leucine (Leu), methionine (Met), asparagine (Asn), proline (Pro), glutamine (Gln), arginine (Arg), serine (Ser), threonine (Thr), valine (Val), tryptophan (Trp), and tyrosine (Tyr) residues.

The results are shown in table 2 below.

**TABLE 2**

| Sample (% DS) (w/w) | Beans | Curd |
|---|---|---|
| Total amino acids | 44 | 32 |
| Cys | 0.7 | 0.5 |
| Met | 0.6 | 0.6 |
| Asp | 5.1 | 3.6 |
| Thr | 1.6 | 1.5 |
| Ser | 2.3 | 1.8 |
| Glu | 8.7 | 5.0 |
| Pro | 2.3 | 1.5 |
| Gly | 1.8 | 1.5 |
| Ala | 1.8 | 1.8 |
| Val | 2.3 | 2.0 |
| Ile | 2.1 | 1.8 |
| Leu | 3.3 | 2.8 |
| Tyr | 1.7 | 1.4 |
| Phe | 2.2 | 1.7 |
| His | 1.2 | 0.9 |
| Ornithine | 0.0 | 0.0 |
| Lys | 2.7 | 1.9 |
| Arg | 3.4 | 1.9 |

### EXAMPLE 4

### Determination of the particle size

The particle size of the beans and the high protein soybean curd (solid phase) produced in EXAMPLE 1 was analysed by YKI (Ytkemiska Institutet, Box 5607, S-114 86 Stockholm, Sweden). 3 samples from the production were evaluated by diffraction using a Malvems Mastersizer 2000.

The determination range was from 0.02-2000 µm.

The solid phase comprising the high protein soybean curd was dispersed using a magnetic stirrer for one hour in distilled water to give a final concentration of 10 %. Samples were withdrawn using a pasteur pipette and dropped into a suitable concentrations/volumes needed for the determination of the particle size by the named instrument; such concentrations/volumes are well known for a person skilled in the art. The final diluted samples were mixed in the measuring instrument for 2 minutes prior to determination of the particle size.

The results obtained for the different samples are summarised in table 3.

**TABLE 3**

| Sample | Mean diameter (µm) |
|---|---|
| Sample 1 | 552 |
| Sample 2 | 538 |
| Sample 3 | 545 |
| Average | 545 |

### EXAMPLE 5

### Determination of trypsin inhibition.

The soybeans used to produce a high protein soybean curd (solid phase) were analysed together with the solid phase produced in EXAMPLE 1.

The analysis was done by RSSL (Reading Scientific Services LTD), PO Box 234, Reading RG6 6LA, Great Britain.

Trypsin was assayed using the substrate Bz-Phe-Val-Arg-pNA (Benzoyl-Phenylalanylvalyl-arginine-*p*-nitroaniline) in 100 mM MOPS (3-(N-Morpholino) propanesulphonic acid) buffer pH 7.3 containing 2 mM CaCl₂. Released p-nitroaniline was measured at 405 nm.

Whole beans were ground in a blender. Ground beans and soy powder were extracted with 9 volumes of 100 mM MOPS buffer pH 7.3 containing 2 mM CaCl₂. All samples were further diluted in the same buffer. The dilutions which inhibited trypsin by 50 % were determined.

The results are shown in table 4 below.

**TABLE 4**

| Sample | Dilution giving 50 % inhibition | Trypsin inhibited by 1 g or 1 ml of soy product / mg | Trypsin inhibited by 1 g of soy product DS / mg |
|---|---|---|---|
| Beans (DS 88.1 %) | 30000 | 115 | 131 |
| Solid Phase (DS 20.6 %) | 120 | 0.5 | 2.4 |

### EXAMPLE 6

### Production of brown bean curd

27-30 kg of soybeans was fed by a screw into a bean washer having a temperature of 92 °C for 90 seconds. The soybeans were then milled together with the process water in a perforated disk mill with a hole diameter of 3 mm, after which the produced slurry was pumped into a second milling step, a colloid mill. The slurry was then pumped into a deaeration vessel and the temperature was decreased to 78 °C. The slurry was pumped into a steam injector and heated with steam at a temperature of 120 °C for 5 seconds. After this, the slurry was transferred into a flashing vessel and the temperature was decreased to 83 °C. The slurry was then pumped into a decanter where the liquid and the solid phases were separated. The solid phase was then mixed with water and transferred to an additional decanter where an additional separation occurred and the final high protein brown bean curd (solid phase) was obtained.

The brown beans and the brown bean curd were analysed to determine the content of protein, fat, fibre and amino acids. The methods used for the measurement of these parameters and their results are shown in the following examples.

### EXAMPLE 7

### Determination of the protein and fibre content

The brown beans used to produce the high protein brown bean curd (solid phase) were analysed together with the solid phase. The analysis was done by AnalyCen, Box 905, S- 531 19 Lidköping, Sweden, and was used to determine the content of the fibres, fat and proteins using standard methods.

The fibre content was analysed by the method/ref AOAC 45.4.07/NMKL 129.

The protein content was analysed by the method/ref A 207:51.

The fat content was analysed by the method/ref NMKL 131.

The results are shown in table 5 below.

**TABLE 5**

| % DC (w/w) | Beans | Curd |
|---|---|---|
| Fibre | 36 | 67 |
| Protein | 22 | 18 |
| Fat | 2 | 2 |

### EXAMPLE 8

### Determination of the amino acid content

The brown beans that were used to produce the high protein brown bean curd (solid phase) and the solid phase itself were analysed to determine the amino acid content. The analyses were done by AnalyCen, Box 905, S- 531 19 Lidköping, Sweden, using the well-known method published in E.C Dir 98/64/EG enclosure 1. In the present application, amino acid names and atom names (e.g. CA, CB, NZ, N, O, C, etc) are used as defined by the Protein DataBank (PDB) which are based on the IUPAC nomenclature (IUPAC Nomenclature and Symbolism for Amino Acids and Peptides (residue names, atom names, etc.), Eur. J. Biochem. 138, 9-37 (1984) together with their corrections in Eur. J. Biochem., 152, 1 (1985).

(All references cited herein are hereby incorporated by reference in their entirety).

The amino acids are as follows alanine (Ala), cysteine (Cys), aspartic acid (Asp), glutamic acid (Glu), phenylalanine (Phe), glycine (Gly), histidine (His), isoleucine (Ile), lysine (Lys), leucine (Leu), methionine (Met), asparagine (Asn), proline (Pro), glutamine (Gln), arginine (Arg), serine (Ser), threonine (Thr), valine (Val), tryptophan (Trp), and tyrosine (Tyr) residues.

The results are summarised in table 6 below.

**TABLE 6**

| Sample (% DS) (w/w) | Beans | Curd |
|---|---|---|
| Total amino acids | 21 | 17 |
| Cys | 0,2 | 0,2 |
| Met | 0,2 | 0,2 |
| Asp | 2,7 | 2,0 |
| Thr | 1,0 | 0,8 |
| Ser | 1,4 | 1,1 |
| Glu | 3,6 | 2,4 |
| Pro | 0,8 | 0,8 |
| Gly | 0,9 | 0,8 |
| Ala | 0,9 | 0,8 |
| Val | 1,2 | 1,0 |
| Ile | 1,0 | 0,9 |
| Leu | 1,8 | 1,4 |
| Tyr | 0,7 | 0,7 |
| Phe | 1,2 | 0,9 |
| His | 0,7 | 0,5 |
| Ornithine - | 0,0 | 0,0 |
| Lys | 1,5 | 1,3 |
| Arg | 1,1 | 1,2 |

### EXAMPLE 9

### Production of a salt base based on soybean curd

2 kg of the soybean curd (or solid base) produced in EXAMPLE 1 was dried in a convection oven at 80°C to a dry substance of 35%. 935 g of the dried soybean curd was then mixed in a Bear varimixer with 30 g sodium chloride, 20 g (15%) citric acid solution and 15 g K60/95 (from Arla Foods, PO Box 505, S-595 29 Mjölby, Sweden). K60/95 is a liquid preservative containing ethanol, water and potassium sorbate. The mixed base was ground to a particle size of about 400 µm using an Ultra-turax machine. The obtained salt base was then used an ingredient in burgers.

### EXAMPLE 10

### Production of burgers based on the salt base

335 g of the preserved salt base obtained in EXAMPLE 9 was mixed with 365 g water, 10 g fat, 13 g 17013 soy protein 1291 (Lyckeby Culinar, PO Box 45, S-290 34 Fjälkinge, Sweden) and 7 g spice blend 1623 (Lyckeby Culinar). The fat used was a fat blend with the following NMR-values (method IUPAC 2.150a); an N₁₀ of 44.5% by weight, and N₂₀ of 18% by weight, and N₃₀ of 6.5% by weight and an N₃₅ of 3% by weight. Burgers were formed or moulded from the obtained mixture and then cooked by frying in a pan. The fried burgers possessed a meat-like texture and had a good taste.

### EXAMPLE 11

### Production of a sweet base based on a soybean curd

2 kg of the soybean curd (solid phase) produced in EXAMPLE 1 was dried in a convection oven at 80°C to a dry substance of 37.5% (w/w). 561 g of the dried soybean curd was then mixed in a Bear varimixer with 387 g sugar, 32 g (15%) citric acid solution and 20g K60/95, from Arla Foods, PO Box 505, S-595 29 Mjölby, Sweden. K60/65 is a liquid preservative containing ethanol, water and potassium sorbate. The mixed base was ground to a particle size of about 500 µm using an Ultra-turax machine. The obtained sweet base was then used as an ingredient in fillings for buns.

### EXAMPLE 12

### Production of buns with a filling based on the sweet base

410 g of the preserved sweet base obtained in EXAMPLE 11 was mixed with 330 g sugar, 146 g water, 39 g glucose, 45g pregelatinised starch and 30 g cinnamon, to obtain a filling having a cinnamon taste. 150 g margarine was melted and 5 dl milk was added and warmed to about 37 °C. 50 g yeast was crumbled in a bowl and the melted margarine and milk was added. 850 g of wheat flour, 1 dl sugar and a half teaspoon salt was added, and the dough vigorously kneaded for about 10 minutes. The dough was then allowed to rise or ferment for about 30 minutes to double its size. The fermented dough was then worked again, cut in four pieces and rolled into thin rectangular cakes. The filling obtained above was spread on the cakes and the cakes were rolled up and cut into 10 pieces. The buns were placed on a baking plate and allowed to rise/ferment for about 30-40 minutes. After fermentation, the buns were brushed with beaten egg and sprinkled with crushed loaf sugar. The buns were baked for about 5-10 minutes at 250 °C. After cooling, the buns were evaluated and the taste was considered equivalent to buns having traditional filings based on almond.

## Claims

1. A process for the production of a high protein curd based on seeds from leguminous plants comprising the steps of:
a) providing and washing the seeds in water at a temperature between 80-95°C,
b) milling the seeds and producing a slurry,
c) heating the slurry in one or more steps to reach a temperature of at least 100°C,
d) separating the liquid phase and the high protein curd in one or more steps,
e) obtaining the high protein curd having a particle size of 800 µm or less.

2. The process according to claim 1, wherein the high protein curd comprises at least 15% (DS)(w/w) of protein, at least 20% (DS)(w/w) of fibre, and has a particle size of 800 µm or less and a dry substance (DS)(w/w) of from about 15% to about 60% (w/w).

3. The process according to claim 1 or 2, wherein the washing is performed at 85-92°C.

4. The process according to any of claims 1-3, wherein the milling is performed by at least two steps, a first step using a perforated disk mill having a diameter of from about 1 to about 5 mm and a second step using a colloid mill having one or more slits to obtain a high protein curd having a particle size below 800 µm.

5. The process according to claim 4, wherein the perforated disk mill has a diameter of 3 mm.

6. The process according to any of claims 1-5, wherein the heat treatment is performed in at least two steps, a first step of steam injection at 120°C less than 30 seconds and a second step of flashing at a temperature below 85°C.

7. A high protein curd obtainable by the process according to any of claims 1-6.

8. The high protein curd according to claim 7, wherein the curd is optionally dried to a dry substance (DS) of from about 15% to about 70%, such as from about 20% to about 60%, such as about 30% to about 40%, such as 35% (w/w).

9. The high protein curd according to claim 7, wherein the curd comprises at least 15% dry substance (DS)(w/w) of protein, at least 20% (DS)(w/w) of fibre, has a particle size of 800 µm or less, and a dry substance (DS) of from about 15% to about 60% (w/w).

10. The high protein curd according to claim 9, wherein the curd has a DS of from about 20% to about 30% (w/w).

11. The high protein curd according to claim 9 or 10, wherein the particle size is from about 100 µm to about 800 µm.

12. The high protein curd according to any of claims 9-11, wherein the particle size is from about 400 µm to about 600µm.

13. The high protein curd according to any of claims 9-12, wherein the protein content is at least 20% (DS) (w/w).

14. The high protein curd based according to any of claims 9-13, wherein the protein content is at least 30% (DS) (w/w).

15. The high protein curd according to any of claims 9-14, wherein the fibre content is at least 25% (DS) (w/w).

16. The high protein curd based according to any of claims 9-15, wherein the fibre content is at least 35% (DS) (w/w).

17. The high protein curd according to any of claims 9-16, wherein the seeds are selected from the group consisting of pea and bean seeds.

18. The high protein curd according to claim 17, wherein the seeds are soybean seeds.

19. The high protein soybean curd according to claim 18, wherein the curd comprises at least 35% (DS) (w/w) protein.

20. The high protein soybean curd according to claim 18 or 19, wherein 1 gram of the high protein soybean curd inhibits less than 10 mg of trypsin.

21. The high protein soybean curd according to any of claims 18-20, wherein 1 gram of the high protein soybean curd inhibits less than 2.5 mg of trypsin.

22. Preserved salt base comprising the high protein bean curd according to claim 7 or 8, salt, preserving agents and/or acids.

23. Preserved sweet base comprising the high protein bean curd according to claim 7 or 8, sugar, preserving agents and/or acids.

24. Preserved salt or sweet base according to claim 22 or 23, having a dry substance of from about 15 to about 70% (w/w).

25. Preserved salt base comprising the high protein bean curd according to any of claims 9-17, or the high protein soybean curd according to any of claims 18-21, salt, preserving agent(s) and/or acids.

26. Preserved sweet base comprising the high protein bean curd according to any of claims 9-17, or the high protein soybean curd according to any of claims 18-21, sugar, preserving agent(s) and/or acids.

27. Process for the production of the preserved salt/sweet base according to any of claims 22-24, comprising obtaining the high protein curd, optionally drying the curd, mixing with preservatives, and optionally milling the curd to give the preserved salt base.

28. Use of the high protein curd according to any of claims 7-21 in food production for mammals such as animals or human beings.

29. Food products comprising the high protein curd according to any of claims 7-21.

30. Use of the preserved salt and sweet base according to any of claims 22-26 in food production for mammals such as animals or human beings.

31. Food products comprising the preserved salt and sweet base according to any of claims 22-26.

## Patentansprüche

1. Verfahren zur Herstellung einer Gallerte mit hohem Proteingehalt auf Basis von Samen der Hülsenfrüchtler, umfassend die Schritte:
a) Bereitstellen und Waschen der Samen in Wasser bei einer Wassertemperatur von 80-95 °C,
b) Mahlen der Samen und Herstellen eines Breies,
c) Erhitzen des Breies in einem oder in mehreren Schritten, um eine Temperatur von wenigstens 100 °C zu erreichen,
d) Trennen der flüssigen Phase und der hochproteinhaltigen Gallerte in einem oder in mehreren Schritten,
e) Gewinnung der hochproteinhaltigen Gallerte, welche eine Partikelgröße von 800 µm oder weniger aufweist.

2. Verfahren nach Anspruch 1, bei welchem die hochproteinhaltige Gallerte einen Gehalt von wenigstens 15 Gew.-% (TS) an Protein und einen Gehalt von wenigstens 20 Gew.-% (TS) an Fasern umfasst sowie eine Partikelgröße von 800 µm oder weniger und eine Trockensubstanz (TS) (Gew.-%) von etwa 15 Gew.-% bis etwa 60 Gew.-% aufweist.

3. Verfahren nach Anspruch 1 oder 2, bei welchem das Waschen bei 85-92 °C erfolgt.

4. Verfahren nach einem oder mehreren der Ansprüche 1-3, bei welchem das Mahlen in wenigstens zwei Schritten erfolgt, nämlich einem ersten Schritt, bei dem eine Lochscheibenmühle mit einem Durchmesser von etwa 1 bis etwa 5 mm verwendet wird, und einen zweiten Schritt, bei dem eine Kolloidmühle mit einem oder mehreren Spalten verwendet wird, um eine Gallerte mit hohem Proteingehalt und einer Partikelgröße von weniger als 800 µm zu erhalten.

5. Verfahren nach Anspruch 4, bei welchem die Lochscheibenmühle einen Durchmesser von 3 mm aufweist.

6. Verfahren nach einem oder mehreren der Ansprüche 1-5, bei welchem die Wärmebehandlung in wenigstens zwei Schritten erfolgt, nämlich einem ersten Schritt der Dampfinjektion bei 120 °C für einen Zeitraum von weniger als 30 Sekunden und einem zweiten Schritt der Kurzzeiterhitzung bei einer Temperatur von weniger als 85 °C.

7. Gallerte mit hohem Proteingehalt, die nach dem Verfahren nach einem oder mehreren der Ansprüche 1-6 erhalten werden kann.

8. Gallerte mit hohem Proteingehalt nach Anspruch 7, wobei die Gallerte wahlweise auf eine Trockensubstanz (TS) von etwa 15 Gew.-% bis etwa 70 Gew.-%, wie beispielsweise von etwa 20 Gew.-% bis etwa 60 Gew.-%, zum Beispiel etwa 30 Gew.-% bis etwa 40 Gew.-%, beispielsweise 35 Gew.-%, getrocknet wird.

9. Gallerte mit hohem Proteingehalt nach Anspruch 7, wobei die Gallerte einen Gehalt von wenigstens 15 Gew.-% Trockensubstanz (TS) an Protein und einen Gehalt von wenigstens 20 Gew.-% (TS) an Fasern umfasst sowie eine Partikelgröße von 800 µm oder weniger und eine Trockensubstanz (TS) von etwa 15 Gew.-% bis etwa 60 Gew.-% aufweist.

10. Gallerte mit einem hohen Proteingehalt nach Anspruch 9, bei welcher die Gallerte eine TS von etwa 20 Gew.-% bis etwa 30 Gew.-% aufweist.

11. Gallerte mit einem hohen Proteingehalt nach Anspruch 9 oder 10, bei welcher die Partikelgröße etwa 100 µm bis etwa 800 µm beträgt.

12. Gallerte mit einem hohen Proteingehalt nach einem oder mehreren der Ansprüche 9-11, bei welcher die Partikelgröße etwa 400 µm bis etwa 600 µm betrifft.

13. Gallerte mit einem hohen Proteingehalt nach einem oder mehreren der Ansprüche 9-12, bei welcher der Proteingehalt wenigstens 20 Gew.-% (TS) beträgt.

14. Gallerte mit einem hohen Proteingehalt nach einem oder mehreren der Ansprüche 9-13, bei welcher der Proteingehalt wenigstens 30 Gew.-% (TS) beträgt.

15. Gallerte mit einem hohen Proteingehalt nach einem oder mehreren der Ansprüche 9-14, bei welcher der Fasergehalt wenigstens 25 Gew.-% (TS) beträgt.

16. Gallerte mit einem hohen Proteingehalt nach einem oder mehreren der Ansprüche 9-15, bei welcher der Fasergehalt wenigstens 35 Gew.-% (TS) beträgt.

17. Gallerte mit einem hohen Proteingehalt nach einem oder mehreren der Ansprüche 9-16, bei welcher die Samen aus der Gruppe ausgewählt sind, die aus Erbsen- und Bohnensamen besteht.

18. Gallerte mit einem hohen Proteingehalt nach Anspruch 17, wobei es sich bei den Samen um Sojabohnensamen handelt.

19. Sojabohnengallerte mit einem hohen Proteingehalt nach Anspruch 18, wobei die Gallerte wenigstens 35 Gew.-% (TS) Protein umfasst.

20. Sojabohnengallerte mit einem hohen Proteingehalt nach Anspruch 18 oder 19, wobei 1 Gramm der Sojabohnengallerte mit hohem Proteingehalt weniger als 10 mg Trypsin inhibiert.

21. Sojabohnengallerte mit einem hohen Proteingehalt nach einem oder mehreren der Ansprüche 18 bis 20, wobei 1 Gramm der Sojabohnengallerte mit hohem Proteingehalt weniger als 2,5 mg Trypsin inhibiert.

22. Konservierter gesalzener Grundstoff, umfassend die Bohnengallerte mit hohem Proteingehalt nach Anspruch 7 oder 8, Salz, ein oder mehrere Konservierungsmittel und/oder Säuren.

23. Konservierter gesüßter Grundstoff, umfassend die Bohnengallerte mit hohem Proteingehalt nach Anspruch 7 oder 8, Zucker, ein oder mehrere Konservierungsmittel und/oder Säuren.

24. Konservierter gesalzener oder gesüßter Grundstoff nach Anspruch 22 oder 23, welcher eine Trockensubstanz von etwa 15 bis etwa 70 Gew.-% aufweist.

25. Konservierter gesalzener Grundstoff, umfassend die Bohnengallerte mit hohem Proteingehalt nach einem oder mehreren der Ansprüche 9-17 oder die Sojabohnengallerte mit hohem Proteingehalt nach einem oder mehreren der Ansprüche 18-21, Salz, ein oder mehrere Konservierungsmittel und/oder Säuren.

26. Konservierter gesüßter Grundstoff, umfassend die Bohnengallerte mit hohem Proteingehalt nach einem oder mehreren der Ansprüche 9-17 oder die Sojabohnengallerte mit hohem Proteingehalt nach einem oder mehreren der Ansprüche 18-21, Zucker, ein oder mehrere Konservierungsmittel und/oder Säuren.

27. Verfahren zur Herstellung des konservierten gesalzenen/gesüßten Grundstoffs nach einem oder mehreren der Ansprüche 22-24, umfassend die Gewinnung der hochproteinhaltigen Gallerte, wahlweise die Trocknung der Gallerte, das Mischen mit Konservierungsmitteln und wahlweise das Mahlen der Gallerte, so dass der konservierte gesalzene Grundstoff erhalten wird.

28. Verwendung der Gallerte mit hohem Proteingehalt nach einem oder mehreren der Ansprüche 7-21 bei der Herstellung von Futter- bzw. Nahrungsmitteln für Säugetiere wie Tiere oder Menschen.

29. Nahrungsmittel- und Futtermittelerzeugnisse, umfassend die Gallerte mit einem hohen Proteingehalt nach einem oder mehreren der Ansprüche 7-21.

30. Verwendung des konservierten gesalzenen und des konservierten gesüßten Grundstoffes nach einem oder mehreren der Ansprüche 22-26 bei der Herstellung von Futter- bzw. Nahrungsmitteln für Säugetiere wie Tiere oder Menschen.

31. Nahrungsmittel- und Futtermittelerzeugnisse, umfassend den konservierten gesalzenen und gesüßten Grundstoff nach einem oder mehreren der Ansprüche 22-26.

## Revendications

1. Procédé pour la production d'un caillé riche en protéines à base de semences de plantes légumineuses, comprenant les étapes consistant à :
a) mettre en oeuvre et laver les semences dans de l'eau à une température de 80 à 95 °C,
b) broyer les semences pour obtenir une suspension,
c) chauffer la suspension en une ou plusieurs étapes pour atteindre une température d'au moins 100 °C,
d) séparer la phase liquide et le caillé riche en protéines en une ou plusieurs étapes, et
e) obtenir le caillé riche en protéines ayant une taille particulaire de 800 µm ou moins.

2. Procédé selon la revendication 1, dans lequel le caillé riche en protéines comprend au moins 15 % (DS) (p/p) de protéines et au moins 20 % (DS) (p/p) de fibres et a une taille particulaire de 800 µm ou moins et une substance sèche (DS) (p/p) d'environ 15 % à environ 60 % (p/p).

3. Procédé selon la revendication 1 ou 2, dans lequel le lavage est effectué à une température de 85 à 92 °C.

4. Procédé selon l'une quelconque des revendications 1 à 3, dans lequel le broyage est réalisé par au moins deux étapes, une première étape utilisant un broyeur à disque perforé ayant un diamètre d'environ 1 à environ 5 mm et une seconde étape utilisant un broyeur colloïdal ayant une ou plusieurs fentes pour obtenir un caillé riche en protéines ayant une taille particulaire inférieure à 800 µm.

5. Procédé selon la revendication 4, dans lequel le broyeur à disque perforé a un diamètre de 3 mm.

6. Procédé selon l'une quelconque des revendications 1 à 5, dans lequel le traitement thermique est effectué en au moins deux étapes, une première étape d'injection de vapeur d'eau à 120 °C de moins de 30 secondes et une seconde étape de traitement éclair à une température inférieure à 85 °C.

7. Caillé riche en protéines pouvant être obtenu par le procédé selon l'une quelconque des revendications 1 à 6.

8. Caillé riche en protéines selon la revendication 7, dans lequel le caillé est éventuellement séché en une substance sèche (DS) d'environ 15 % à environ 70 %, notamment d'environ 20 % à environ 60 %, par exemple d'environ 30 % à environ 40 %, par exemple de 35 % (p/p).

9. Caillé riche en protéines selon la revendication 7, dans lequel le caillé comprend au moins 15 % de substance sèche (DS) (p/p) de protéine et au moins 20 % (DS)(p/p) de fibres, il a une taille particulaire de 800 µm ou moins et une substance sèche (DS) d'environ 15 % à environ 60 % (p/p).

10. Caillé riche en protéines selon la revendication 9, dans lequel le caillé a une DS d'environ 20 % à environ 30 % (p/p).

11. Caillé riche en protéines selon la revendication 9 ou 10, dans lequel la taille particulaire est d'environ 100 µm à environ 800 µm.

12. Caillé riche en protéines selon l'une quelconque des revendications 9 à 11, dans lequel la taille particulaire est d'environ 400 µm à environ 600 µm.

13. Caillé riche en protéines selon l'une quelconque des revendications 9 à 12, dans lequel la teneur en protéines est d'au moins 20 % (DS)(p/p).

14. Caillé riche en protéines selon l'une quelconque des revendications 9 à 13, dans lequel la teneur en protéines est d'au moins 30 % (DS)(p/p).

15. Caillé riche en protéines selon l'une quelconque des revendications 9 à 14, dans lequel la teneur en fibres est d'au moins 25 % (DS) (p/p).

16. Caillé riche en protéines selon l'une quelconque des revendications 9 à 15, dans lequel la teneur en fibres est d'au moins 35 % (DS) (p/p).

17. Caillé riche en protéines selon l'une quelconque des revendications 9 à 16, dans lequel les semences sont choisies dans le groupe constitué des semences de pois et de haricots.

18. Caillé riche en protéines selon la revendication 17, dans lequel les semences sont des semences de soja.

19. Caillé riche en protéines selon la revendication 18, dans lequel le caillé comprend au moins 35 % de protéines (DS)(p/p).

20. Caillé de fèves de soja riche en protéines selon la revendication 18 ou 19, dans lequel 1 gramme du caillé de fèves de soja riche en protéines inhibe moins de 10 mg de trypsine.

21. Caillé de fèves de soja riche en protéines selon l'une quelconque des revendications 18 à 20, dans lequel 1 gramme du caillé de fèves de soja riche en protéines inhibe moins de 2,5 mg de trypsine.

22. Base salée de conservation comprenant le caillé de fèves riche en protéines selon la revendication 7 ou 8, du sel, des agents conservateurs et/ou des acides.

23. Base sucrée de conservation comprenant le caillé de fèves riche en protéines selon la revendication 7 ou 8, du sucre, des agents conservateurs et/ou des acides.

24. Base salée ou sucrée de conservation selon la revendication 22 ou 23, ayant une substance sèche d'environ 15 à environ 70 % (p/p).

25. Base salée de conservation comprenant le caillé de fèves riche en protéines selon l'une quelconque des revendications 9 à 17 ou le caillé de fèves de soja riche en protéines selon l'une quelconque des revendications 18 à 21, du sel, un ou des agents conservateurs et/ou des acides.

26. Base sucrée de conservation comprenant le caillé de fèves riche en protéines selon l'une quelconque des revendications 9 à 17 ou le caillé de fèves de soja riche en protéines selon l'une quelconque des revendications 18 à 21, du sucre, un ou des agents conservateurs et/ou des acides.

27. Procédé pour la production de la base salée/sucrée de conservation selon l'une quelconque des revendications 22 à 24, comprenant l'obtention du caillé riche en protéines, éventuellement le séchage du caillé, le mélange avec les conservateurs et éventuellement le broyage du caillé pour obtenir la base salée de conservation.

28. Utilisation du caillé riche en protéines selon l'une quelconque des revendications 7 à 21 dans la production d'aliments pour mammifères, tels que des animaux ou des êtres humains.

29. Produits alimentaires comprenant le caillé riche en protéines selon l'une quelconque des revendications 7 à 21.

30. Utilisation de la base salée et de la base sucrée de conservation selon l'une quelconque des revendications 22 à 26 dans la production d'aliments pour mammifères, tels que des animaux ou des êtres humains.

31. Produits alimentaires comprenant la base salée et la base sucrée de conservation selon l'une quelconque des revendications 22 à 26.
